# EUROPEAN PATENT SPECIFICATION

(11) **EP 0 404 511 B1**
(45) Date of publication and mention of the grant of the patent: **24.04.1996**
(21) Application number: 90306671.0
(22) Date of filing: 19.06.1990
(51) Int. Cl.: H01L 41/09

(54) **Ultrasonic motor**
Ultraschallmotor
Moteur à ultrasons

(30) Priority: 19.06.1989 JP 71908/89 U; 22.01.1990 JP 13031/90; 04.04.1990 JP 36669/90 U
(43) Date of publication of application: 27.12.1990
(73) Proprietor: SEIKO INSTRUMENTS INC., Tokyo 136 (JP)
(72) Inventor: Kawata, Masayuki, C/o Seiko Instruments Inc., Tokyo (JP); Ozawa, Fujio, C/o Seiko Instruments Inc., Tokyo (JP); Kasuga, Masao, C/o Seiko Instruments Inc., Tokyo (JP); Suzuki, Minako, C/o Seiko Instruments Inc., Tokyo (JP); Shibayama, Takako, C/o Seiko Instruments Inc., Tokyo (JP)
(74) Representative: Sturt, Clifford Mark

(56) References cited:
- PATENT ABSTRACTS OF JAPAN vol. 12, no. 60 (E-584) 23 February 1988 & JP-A-62 201 072
- PATENT ABSTRACTS OF JAPAN vol. 11, no. 254 (E-533) 18 August 1987 & JP-A-62 064 278

## Description

This invention relates to ultrasonic motors which utilise a vibrating wave generated in a vibration member for rotating a rotor.

In a conventional vibrating wave motor having a bearing for supporting the rotation of a rotor, the rotor is generally rotatably mounted on a central shaft via the bearing. In such a motor the amount of wobble in the bearing is normally small and is not set to a specific level.

In a vibrating wave motor, two kinds of alternating voltages of different phases are conventionally applied to a piezoelectric element adhered to a vibration member, to generate a vibrating wave in the vibration member in accordance with expansion and contraction of the piezoelectric element. The rotor is engaged under pressure with the vibration member and is thereby driven, by means of a frictional force, in a direction opposite to the direction which the vibrating wave advances.

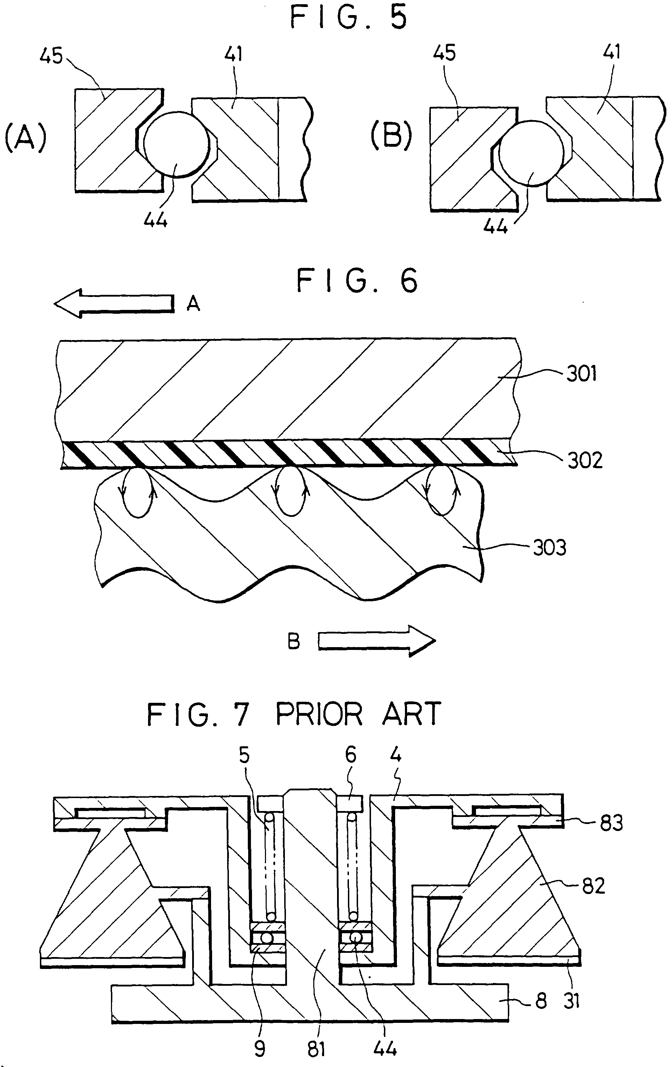

Figure 6 shows a desired contacting condition between a vibration member 303 and a friction member 302 bonded to a rotor 301, where A is the direction of the rotor 301 and B is that of the travelling wave.

Since the rotor is driven by a frictional force, it is ideally desirable that all of the ridges of travelling wave uniformly contact the sliding surface of the friction member. However, as far as the piezoelectric element is concerned, it is impossible to generate a really regular vibrating wave due to variations in the shape of the electrode patterns and variation in the polarisation condition thereof. Also, as far as the sliding surface of the friction member is concerned, it is impossible for the contacting condition thereof to become really uniform due to variation in manufacturing accuracy. Accordingly, in order to obtain a motor of high efficiency, it is necessary for the construction of the motor to be such that the motor has a part for absorbing or compensating the variations referred to above. In a motor having a bearing for supporting the rotation of the rotor, wobbling of the bearing works to absorb such variations. Therefore, when the amplitude of the wobbling of the bearing is extremely small, such variation cannot be absorbed and the contacting condition becomes uneven. This may cause slippage to occur, and the performance of the motor to be reduced.

JP-A-63-167683 discloses an ultrasonic motor operating on the basis of a vibrating wave and is shown in figure 7. A support 8 is provided with a vibrator portion 82 to which a piezoelectric element 31 is adhered. A rotor 4 is rotatably supported by a shaft 81 of the support 8 by way of a bearing 9 having balls 44. A coil spring 5, for bringing the rotor into pressure contact with a bending plate portion 83 carried on projections of the vibrator portion 82 of the support 8, is provided inside the vibrator portion 82 in vertical alignment with the bearing 9, so as to come into pressure contact, at one end, with an upper bearing ring or ball receiving plate of the bearing 9. The other end of the coil spring 5 is supported by a spring support seat 6. The coil spring 5 and the upper bearing ring of the ball bearing 9 are coaxially arranged one above the other in vertical alignment with each other. Therefore, this structure has the disadvantage that the thickness of the ultrasonic motor cannot readily be reduced.

Further, the rotor and the upper and lower bearing rings of the ball bearing are not shaped to determine the positions of the balls, and so the balls move freely to displaced positions, whereby the pressing force exerted by the coil spring is likely to be unstable.

Additionally, the lower bearing ring or ball receiving plate of the ball bearing is fixed to the rotor, and hence friction results in the balls of the bearing transmitting the rotation of the rotor to cause rotation of the upper bearing ring. Accordingly, the coil spring 5 is subjected to twisting, the pressing force of the spring varies, and the upper bearing ring and the shaft 81 tend to become worn, rendering the rotation of the rotor unstable. Furthermore, the position of the lower bearing ring rotatably supported on the shaft 81, with the rotor centred on the shaft 81, is lower in cross-section than the projections of the vibration member. Therefore, grating may occur between the lower bearing ring and the shaft because of inclination of the rotor axis in the pressing direction of the spring. As a result, the force of the coil spring is not transmitted sufficiently to ensure contact between the projections of the vibration member and the rotor.

It is an object of the present invention to provide a structure which adequately solves at least some of the problems described above.

According to the present invention, there is provided an ultrasonic motor utilising a vibrating wave generated in a vibration member for rotating a rotor, in which the vibration member includes a piezoelectric element for generating a vibrating wave, a pressure regulator in the form of a coil spring generates contact pressure between the rotor and the vibration member;
a rotor is rotatably guided on a support by way of a ballbearing arrangement comprising balls between rings, and the vibration member is fixed to the support, characterised in that the rings of the ballbearing arrangement comprise an inner ring and an outer ring, in that
the inner ring is mounted on the support for movement along the support axis, in that
the outer ring is fixed to the rotor, and in that
the pressure regulator coil spring is received in and acts on the inner ring.

The vibration member may have the amplifying projections directed towards the rotor. In this case, the rotor and the projections of the vibration member are brought into pressure contact with each other by the coil spring.

An end of the coil spring may be received in spring support means fixed relative to the support.

The coil spring may be received within a groove of the inner ring and so positioned such that it is not aligned vertically with the balls.

The motor may include means for restricting rotation of the inner ring following rotation of the outer ring.

The support may comprise a support pin on which the inner ring is rotatably received and one of the opposing surfaces of the inner ring and the support pin may be provided with a protruding annular band at the same level as the level of the balls, to reduce grating between the inner ring and the support pin due to an inclination of the rotor.

Even if there exists an inclination of the vibration member fitted to the support pin within the fitting tolerance, there is a margin of tilt angle of the inner ring with respect to the support pin before grating develops.

Accordingly, the inner ring with which the coil spring is in contact applies a stable pressing force to the rotor disposed on the outer ring.

There have been proposed other forms of ultrasonic motor, for example in JP-A-62-201072 and JP-A-62-64278. In both these disclosures, there is a motor having a rotor, a vibration member with a piezoelectric element, a pressure regulator means and a ball bearing arrangement. The pressure regulator means by which the vibrator member is pressed into contact with the rotor comprises a leaf spring or springs acting upon the vibrator, and the rotor is fixed to one ring of the ball bearing arrangement, with the spring(s), the vibrator and ball bearing arrangement being stacked at different levels.

The invention is described further, by way of example, with reference to the accompanying drawings, in which:
Figures 1, 2, 3, and 4 are sectional views, each showing a different embodiment of ultrasonic motor according to the present invention;
Figure 5 is a sectional view showing wobbling of a bearing in the present invention;
Figure 6 is a sectional view showing the contacting condition of a friction member and a vibration member in the vibrating wave motor according to the present invention; and
Figure 7 is a sectional view showing an example of prior art ultrasonic motor.

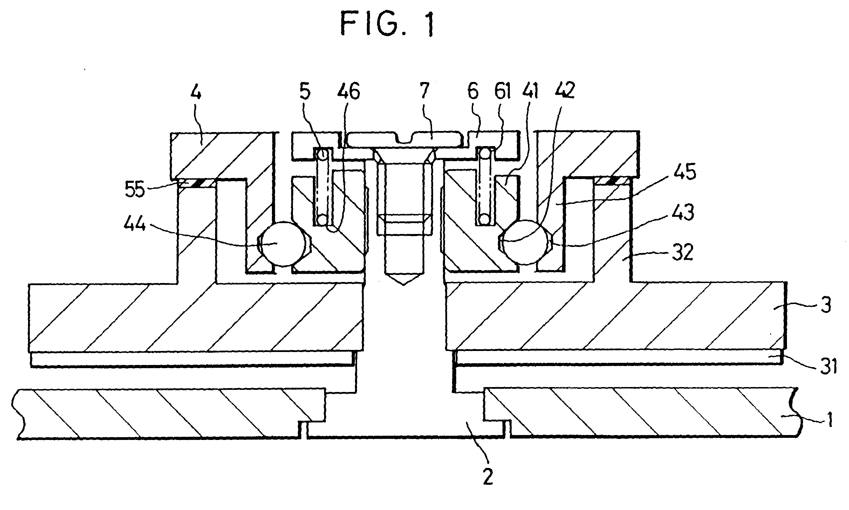

In a first embodiment of an ultrasonic motor according to the invention (figure 1), a support pin 2 is fixed to a support plate 1. A vibration member 3 having a piezoelectric element 31 adhered thereto is fixed to the support pin 2. An inner ring 41 having a coil receiving groove 46 for receiving a coil spring 5 is fitted rotatably to the support pin 2. Balls 44 are held inside a ball positioning groove 42 formed in the inner ring 41.

Another ball positioning groove 43, which is substantially similar to the ball positioning groove 42, is formed in an outer ring 45 at a position for receiving the balls 44 interposed between the two rings. The inner ring 41, the balls 44 and the outer ring 45 combine to form a ball bearing.

The vibration member 3 has projections 32 directed towards a rotor 4 fixed to the outer ring 45 which lies inside the projections 32 which are formed for displacement expansion on the vibration member 3. The rotor 4 and the projections 32 of the vibration member 3 are brought into pressure contact with each other by the coil spring 5, the coil spring 5 being supported at one end by the inner ring 41 in the coil spring receiving groove 46 and at the other end by spring support seat 6 having a groove 61 for receiving the spring. The seat 6 is centred on the support pin 2 and is fixed to the support pin 2 by a set screw 7. As illustrated, the coil spring receiving groove 46 of the inner ring 41 and the coil spring 5 are disposed at positions where they are not aligned vertically with the balls 44.

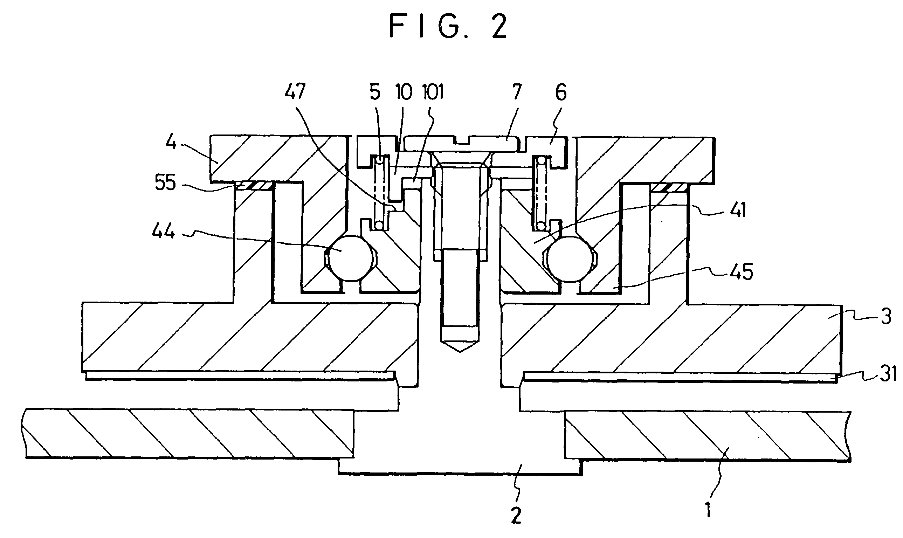

Figure 2 is a sectional view showing another embodiment of ultrasonic measure according to the present invention, in which a surface cut portion 47 is formed in an outer peripheral portion of the inner ring 41. An inner ring pressure element 10 is fitted between the support pin 2 and the spring support seat 6 in such a manner that the surface cut portion 47 of the inner ring 41 meshes with a finger 101 on the inner ring pressure element 10. The inner ring pressure element 10 is fixed by the set screw 7 and restricts rotation of the inner ring 41 in response to the rotation of the outer ring 45.

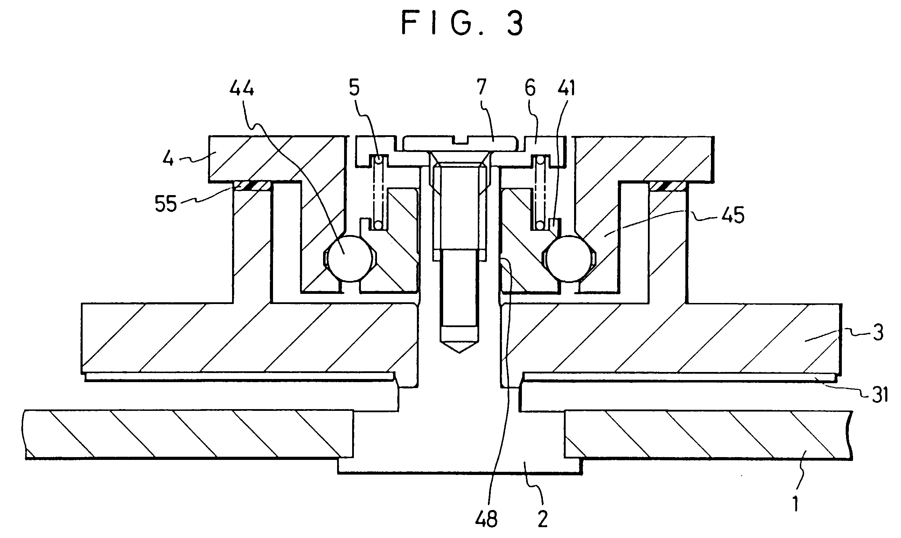

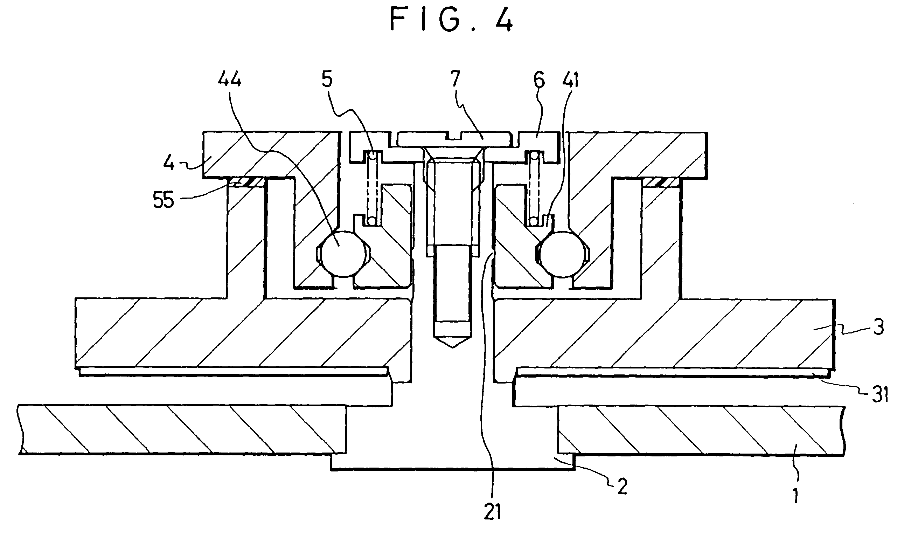

Figures 3 and 4 are sectional views, each showing still another embodiment of ultrasonic motor measurement according to the present invention. In these embodiments, a belt like protuberance or protruding band 48 or 21 is provided on either the inner peripheral surface of the inner ring 41 (Figure 3) or on the outer periphery of the support pin 2 (Figure 4) and at the same level as the position of the balls 44. With this structure, even when the inner ring 41 inclines relative to the balls 44, the variation of inclination is small because the band width of the protuberance 48 or 21 existing on the sliding services between the support 2 and the inner ring 41 becomes small. Accordingly, little grating occurs between the support pin 2 and the inner ring 41.

In accordance with the present invention described above, the ball bearing is supported by the seat 6 through the coil spring 5 and the seat 6 is fixed to the support pin 2 by the set screw 7. Since the coil spring receiving groove 46 of the inner ring 41 and coil spring 5 are disposed at positions where they are not vertically aligned with the balls 44, the inner ring 41 in contact with the coil spring 5 supports the rotor 4, which is provided on the outer ring 45, through the balls 44. Therefore, a stable pressing force can be applied to the rotor. Since the balls 44 and the coil spring 5 are provided at positions where they are not aligned vertically, the thickness of the ultrasonic motor can also been reduced.

Furthermore, in the Figure 2 embodiment, since the surface cut portion 47 is formed on the upper part of the inner ring and the inner ring pressure element 10 is fixed to the support pin 2 by the set screw 7, rotation of the inner ring 41 following the rotation of the outer ring 45 can be prevented. A stable pressing force can thus be obtained between the rotor 4 and the vibration member 3. Further, wear of the inner ring 41 and the support pin 2 can be prevented and the rotation of the rotor 4 can be stabilised.

In the Figure 3 and 4 embodiments, since the protuberance 48 or 21 is disposed either on the inner ring 41 or the support pin 2 at the same level as the position of the balls 44, grating between the inner ring 41 and the support pin due to inclination of the rotor hardly occurs and the spring pressing force can again be stabilised.

Further, referring to Figure 6, the present invention is constructed so that the amount of wobbling of the bearing, which is used to support the rotation of the rotor, in the direction of the thrust thereof is greater than the amplitude of a travelling wave shown occuring in the vibration member 303 (55), or greater than the larger of the amplitude of the same travelling wave in the surface variation of a sliding surface of a friction member 302 (55) on the rotor 301 (4). The amount of wobbling of the bearing in the direction of the thrust thereof mentioned above means the total amount of vertical movement of the bearing occurring between the condition shown in Figure 5(A), in which the outer ring 45 rises with respect to the inner ring 41 via the balls 44, and the condition shown in Figure 5(B), in which the outer ring falls with respect to the inner ring 41 via the balls 44.

When the amount of wobbling of the bearing, which is used to support the rotation of the rotor, in the direction of the thrust thereof of is set larger than the amplitude of the travelling wave generated in the vibration member, the degree of freedom of vertical movement of the rotor increases. Accordingly, even when the travelling wave becomes uneven, the rotor is automatically driven so as to attain the most stable contacting condition. When the amount of wobbling of the bearing in the direction of the thrust thereof is set larger than the surface of the variation of the sliding surface of the friction member, the degree of freedom of vertical movement of the rotor increases. This can prevent partial contacting of the rotor contact surface with respect to the vibration member and enables a uniform contacting condition of the contact surface to be obtained as shown in Figure 6.

A motor as described, in which the outer diameter of the vibrator was 10mm was produced for testing. In this motor, the amplitude of the vibration of the vibration member in a no-load condition was around 1µm to 2µm and the surface variation of a friction member on the rotor varied around 5µm to 10µm. Experiments were conducted with this motor by varying the amount of wobbling of the bearing in many ways and it was observed that, when the amount of wobbling of the bearing was not more than 10µm, the rotary performance of the motor was inferior. It was also found that sliding noise was large, and that slippage occurred. Accordingly, it was determined that the amount of wobbling of the bearing should be larger than the surface variation of the friction member. As described above, in the present invention the amount of wobbling of the bearing in the direction of the thrust thereof is set to be greater than the amplitude of the travelling wave generated in the vibration member, or greater that the larger of the amplitude of the same travelling wave and the variation in the sliding surface of the friction member, whereby the degree of freedom of the vertical movement of the rotor increases to enable tolerances in the dimensions of the vibration member and friction member be absorbed, a stable contacting condition of these parts to be obtained, and a travelling wave motor of a high efficiency to be provided.

The present invention as described above thus offers the advantage of being able to reduce the thickness of the ultrasonic motor, to apply a stable pressing force, to prevent rotation of the inner bearing ring following the rotation of the outer bearing ring, to prevent thrust between the inner bearing ring and the support pin due to grating, and to provide a motor of high efficiency.

## Claims

1. An ultrasonic motor utilising a vibrating wave generated in a vibration member (3) for rotating a rotor (4), in which the vibration member (3) includes a piezoelectric element (31) for generating the vibrating wave, a pressure regulator (5) in the form of a coil spring generates contact pressure between the rotor (4) and the vibration member (3), the rotor (4) is rotatably guided on a support (2) by way of a ballbearing arrangement comprising balls (44) between rings (41,45), and the vibration member (3) is fixed to the support (2), characterised in that the rings of the ballbearing arrangement comprise an inner ring (41) and an outer ring (45), in that the inner ring (41) is mounted on the support (2) for movement along the support axis, in that the outer ring (45) is fixed to the rotor (4), and in that the pressure regulator coil spring (5) is received in and acts upon the inner ring (41).

2. A motor as claimed in claim 1, characterised in that the vibration member (3) has amplifying projections (32) directed towards the rotor (4).

3. A motor as claimed in claim 1 or 2, characterised by spring support means (6) fixed relative to the support (2) for receiving an end of the coil spring (5).

4. A motor as claimed in any one of claims 1 to 3, characterised in that the coil spring (5) is received within a groove (46) of the inner ring (41) and is so positioned that it is not vertically aligned with the balls (44).

5. A motor as claimed in any preceding claim, characterised by means (47, 101) for restricting rotation of inner ring (41) following rotation of the outer ring (45).

6. A motor as claimed in any preceding claim, characterised in that the support (2) comprises a support pin on which the inner ring (41) is rotatably received, and in that one of the opposing surfaces of the inner ring (41) and the support pin is provided with a protruding annular band (48, 21) at the level of the balls (44).

7. A motor as claimed in any preceding claim, characterised in that the amount of wobble in the direction of the thrust of the ball bearing in use is arranged to be larger than the amplitude of the vibrating wave generated in the vibration member (3).

8. A motor as claimed in any preceding claim, characterised in that the vibration member (3) includes friction means (55) arranged for contacting the rotor (4).

9. An ultrasonic motor as claimed in claim 8, characterised in that the amount of wobble in the direction of the thrust of the ball bearing in use is arranged to be larger than the surface variation of the sliding surface of the friction means (55).

## Patentansprüche

1. Ultraschallmotor, der zum Drehen eines Rotors (4) eine in einem Schwingelement (3) erzeugte schwingende Welle verwendet, wobei das Schwingelement (3) ein piezoelektrisches Element (31) zum Erzeugen der schwingenden Welle aufweist, ein Druckregulator (5) in Form einer Schraubenfeder Kontaktdruck zwischen dem Rotor (4) und dem Schwingelement (3) erzeugt, der Rotor (4) an einem Träger (2) mittels einer Kugeln (44) zwischen Ringen (41, 45) aufweisenden Kugellageranordnung drehbar geführt ist und das Schwingelement (3) an dem Träger (2) befestigt ist, dadurch gekennzeichnet, daß die Ringe der Kugellageranordnung einen Innenring (41) und einen Außenring (45) aufweisen, daß der Innenring (41) an dem Träger (2) zur Bewegung längs der Trägerachse angebracht ist, daß der Außenring (45) an dem Rotor (4) befestigt ist und daß die druckregulierende Schraubenfeder (5) in dem Innenring (41) aufgenommen ist und auf diesen wirkt.

2. Motor nach Anspruch 1, dadurch gekennzeichnet, daß das Schwingelement (3) zu dem Rotor (4) gerichtete Verstärkungszvorsprünge (32) aufweist.

3. Motor nach Anspruch 1 oder 2, gekennzeichnet durch ein Federstützmittel (6), das relativ zu dem Träger (2) zur Aufnahme eines Endes der Schraubenfeder (5) fest ist.

4. Motor nach einem der Ansprüche 1 bis 3, dadurch gekennzeichnet, daß die Schraubenfeder (5) in einer Nut (46) des Innenrings (41) aufgenommen ist und so positioniert ist, daß sie mit den Kugeln (44) vertikal nicht fluchtet.

5. Motor nach einem der vorhergehenden Ansprüche, gekennzeichnet durch ein Mittel (47, 101) zum Hemmen der Drehung des Innenrings (41), die einer Drehung des Außenrings (45) folgt.

6. Motor nach einem der vorhergehenden Ansprüche, dadurch gekennzeichnet, daß der Träger (2) einen Tragstift (4) aufweist, an dem der Innenring (41) drehend aufgenommen ist, und daß eine der gegenüberliegenden Flächen des Innenrings (41) und des Tragstifts (4) in Höhe der Kugeln (44) mit einem vorstehenden ringförmigen Band (48, 21) versehen ist.

7. Motor nach einem der vorhergehenden Ansprüche, dadurch gekennzeichnet, daß der Kippbetrag in Schubrichtung des Kugellagers bei Verwendung so ausgelegt ist, daß er größer als die Amplitude der in dem Schwingelement (3) erzeugten schwingenden Welle ist.

8. Motor nach einem der vorhergehenden Ansprüche, dadurch gekennzeichnet, daß das Schwingelement (3) ein Reibmittel (55) enthält, das zum Berühren des Rotors (4) angeordnet ist.

9. Ultraschallmotor nach Anspruch 8, dadurch gekennzeichnet, daß der Kippbetrag in Schubrichtung des Kugellagers bei Verwendung so ausgelegt ist, daß er größer als die Oberflächenschwankung der Gleitfläche des Reibmittels (55) ist.

## Revendications

1. Moteur à ultrason utilisant une onde oscillante produite dans un élément (1) oscillant destiné à faire tourner un rotor (4), dans lequel l'élément (3) oscillant comporte un élément (31) piézo-électrique destiné à produire l'onde oscillante, un régulateur (5) de pression sous la forme d'un ressort hélicoïdal produit une pression de contact entre le rotor (4) et l'élément (3) oscillant, le rotor (4) est guidé en rotation sur un support (2) au moyen d'un dispositif de roulement à billes qui comprend des billes (44) entre des bagues (41,45) , et l'élément (3) oscillant est fixé au support (2), caractérisé en ce que les bagues du dispositif à roulement à billes comprend une bague (41) intérieure et une bague (45) extérieure; en ce que la bague (41) intérieure est montée sur le support (2) pour se déplacer suivant l'axe du support, en ce que la bague (45) extérieure est fixée au rotor (4), et en ce que le ressort hélicoïdal du régulateur (5) de pression est reçu dans la bague (41) intérieure et agit sur celle-ci.

2. Moteur suivant la revendication 1 caractérisé en ce que l'élément oscillant a des saillies d'amplification dirigées vers le rotor (4)

3. Moteur suivant la revendication 1 ou 2 caractérisé par des moyens (6) élastiques de support, fixes par rapport au support (2), destinés à recevoir une extrémité du ressort (5) hélicoïdal.

4. Moteur suivant l'une quelconque des revendications 1 à 3, caractérisé en ce que le ressort hélicoïdal est reçu dans une rainure (46) de la bague (41) intérieure et est placé de manière qu'il ne soit pas à l'aplomb des billes (44).

5. Moteur suivant l'une quelconque des revendications précédentes, caractérisé par des moyens (47,101) destinés à restreindre la rotation de la bague (41) intérieure à la suite d'une rotation de la bague (45) extérieure.

6. Moteur suivant l'une quelconque des revendications précédentes, caractérisé en ce que le support (2) comprend une broche de support sur laquelle la bague (41) intérieure est reçue en pouvant tourner, et en ce que l'une des faces en opposition de la bague (41) intérieure et la broche de support sont munies d'une bande (48,21) annulaire faisant saillie au niveau des billes (44).

7. Moteur suivant l'une quelconque des revendications caractérisé en ce que la valeur du flottement, suivant la direction de la poussée, du roulement à billes en fonctionnement est prévue de manière être supérieure à l'amplitude de l'onde oscillante produite dans l'élément (3) oscillant.

8. Moteur suivant l'un des revendications précédentes caractérisé en ce que l'élément (3) oscillant comporte des moyens (55) de frottement disposés de manière à être en contact avec le rotor (4).

9. Moteur à ultrason suivant la revendication 8, caractérisé en ce que la valeur du flottement, suivant la direction de la poussée, du roulement à billes en fonctionnement est telle qu'elle est supérieure à la variation d'aire de la surface de glissement des moyens (55) de frottement.
